# EUROPEAN PATENT SPECIFICATION

(11) **EP 0 221 548 B1**
(45) Date of publication and mention of the grant of the patent: **03.02.1993**
(21) Application number: 86115354.2
(22) Date of filing: 05.11.1986
(51) Int. Cl.: B24D 7/00, B24D 18/00

(54) **Cutting tool having concentrically arranged outside and inside abrasive grain layers and method for production thereof**
Schneidwerkzeug mit ausserhalb und innerhalb konzentrisch angeordneten Schleifmittelschichten und Verfahren zu dessen Herstellung
Outil de découpage pourvu de couches abrasives intérieures et extérieures disposées concentriquement et son procédé de fabrication

(30) Priority: 05.11.1985 JP 247749/85
(43) Date of publication of application: 13.05.1987
(73) Proprietor: DISCO ABRASIVE SYSTEMS, LTD., Ota-Ku Tokyo 144 (JP)
(72) Inventor: Umeda, Yoshio Lions Mansion Kanazawa Hakkei No. 3, Yokohama Kanagawa-ken (JP)
(74) Representative: Sajda, Wolf E., Dipl.-Phys.

(56) References cited:
- EP-A- 0 092 818
- EP-A- 0 156 762
- CH-A- 391 498
- FR-A- 1 374 214
- FR-A- 2 069 266
- GB-A- 558 721
- GB-A- 966 604
- JP-U-57 136 610
- PATENT ABSTRACTS OF JAPAN, vol. 9, no. 57 (M-363)[1780], 13th March 1985; & JP-A-59 192 461 (DEISUKO K.K.) 31-10-1984
- IDEM

## Description

The invention relates to a method of producing a cutting tool comprising a supporting base with inside and outside supporting surfaces and concentric cutting segments having abrasive grains which are provided in circumferentially spaced relationship.

The invention also relates to a cutting tool comprising a supporting base with inside and outside supporting surfaces and concentric cutting segments having abrasive grains which are provided in circumferentially spaced relationship.

Optical or magnetic discs have found wide commercial acceptance as an optical or magnetic recording medium. The base plate of such an optical or magnetic disc has previously been formed of a metallic material such as aluminum, but in recent years, it has been proposed to make optical or magnetic discs from glass or ceramics for various reasons including the need to increase surface flatness and smoothness.

In the production of the base plate from glass or ceramics, it is generally necessary to cut a square or rectangular glass or ceramic plate along concentric circular outside and inside cutting lines and to obtain a disc-shaped base plate remaining between the circular outside and inside cutting lines. It is important to perform the cutting along the circular outside and inside cutting lines very precisely, for example by limiting the circularity of each of the inner circumferential edge and the outer circumferential edge of the base plate and the concentricity between the two to less than several tens of micrometers to several micrometers without forming excessively large chippings, for example those having a dimension of at least 0,2 mm in an arbitrary direction, on the inner circumferential edge and/or the outer circumferential edge of the base plate.

As is well known, however, glass or ceramics have high hardness and brittleness, and are much more difficult to cut than metal. Hence, no cutting tool has been developed which can be applied to the production of a base plate for optical or magnetic discs by efficiently cutting a glass or ceramic plate.

A cutting tool and a method of producing a cutting tool as specified above are known from JP-U-57-136 610, in which a cutting tool is disclosed having cylindrical outside and inside support members which are disposed concentrically, wherein a plurality of arcuate grinding stones or cutting segments are provided on the front end portions of the outside and inside support members in a circumferentially spaced relationship. These grinding stones or cutting segments are formed by bonding abrasive grains by silver solder to the axial front end portions of the concentric outside and inside support members.

In the production of such a conventional cutting tool, it is difficult to form the cutting segments themselves with sufficient precision at the required positions of the front end portions of the respective outside and inside support members. This difficulty arises both in axial direction and in radial direction of the conventional cutting tool. This is due to the fact that, when bonding the abrasive grains to the outside and inside support members, the grains have a tendency to form configurations which are bulging out from the respective support members. Also, in such a conventional cutting tool, the grinding portions of abrasive grains have only a limited height so that the cutting tool has a limited time of operation, otherwise damages of the workpiece to be cut may occur.

Document JP-A-59-192 461 published in Patent Abstracts of Japan, Vol. 9, No. 57 (M 363) (1780) of March 13, 1985 describes a tubular boring grindstone and a method of manufacturing such a grindstone wherein a winding layer of non-conductive material is formed around the circumference at the leading edge of a large diameter section of a cylindrical supporter made of a conductive metal. Then, the supporter is immersed into an electrodeposition tank and is connected with a cathode electrode, while metal to be applied by electrolysis is connected to an anode electrode and immersed into the electrolyte. Consequently, grindstone particles are deposited onto the supporter and then a non-conductive material layer is peeled off to form an electrodeposition layer on the surface of the supporter. Thereafter, the small diameter section of the supporter is immersed into a dissolution tank to dissolve the small diameter section and to leave a hollow electrodeposition layer which is formed into a tubular grindstone. The aspect of making a cutting tool with concentric inside and outside cutting segments having excellent concentricity and circularity is not touched in this document.

Accordingly, the object underlying the present invention is to provide a cutting tool of the type specified above which is suitable for efficiently cutting a glass or ceramic plate along concentrically arranged circular outside and inside cutting lines sufficiently precisely without producing excessively large chippings, as well as a method of producing such a cutting tool.

The method according to the invention is characterized by the following steps: providing a supporting base with a protrusion having smooth concentric cylindrical inner and outer circumferential surfaces, the roughness of which has a maximum height Rmax defined in JIS B0621 of not more than 6,3 µm, preferably not more than 0,8 µm; electrodepositing abrasive grains on the concentric inner and outer surfaces to form inside and outside abrasive grain layers each having several abrasive grains present in the thickness direction; removing part of the material of the supporting base between the abrasive grain layers by cutting and/or dissolving in order to form front end portions of the inside and outside abrasive grain layers, which front end portions freely project concentrically in axial direction from the supporting base and of which the respective opposite inner surfaces are smooth surfaces corresponding to the circumferential inner and outer surfaces.

According to a further development of the method according to the invention, the front end portions of the abrasive grain layers are processed to form inclined end surfaces which converge towards the respective smooth inner surfaces. In a specific embodiment according to the invention, this processing is carried out by an electrical discharge.

A further development of the method of the invention is characterized in that a supporting base is used which has a hollow cylindrical protrusion forming the outer and inner circumferential surfaces, and in that the front end surfaces of the abrasive grain layers are polished to the same plane before removing the material of the supporting base.

A further development of the method of the invention is characterized by a step of mechanically cutting the front end portion of the protrusion partly after the electrodeposition step and before the step of removing material of the supporting base.

In a specific embodiment according to the invention, circumferentially spaced cuts are formed in the inner and outer abrasive grain layers during electrodepositing by masking and/or after electrodepositing by an electrical discharge.

According to a furter development of the method according to the invention, natural or synthetic diamond abrasive grains or cubic boron nitride abrasive grains having a particle size of U.S. mesh Nos. 200 to 300 are used.

In a specific embodiment of the method according to the invention, the outside and inside abrasive grain layers are formed with a thickness of 0,3 to 2,0 mm, especially 0,5 to 0,7 mm.

According to a further development of the method according to the invention, the front end portions of the abrasive grain layers are provided with an inclination angle at their inclined surfaces of 30° to 80° against the respective smooth inner surfaces.

According to a further development of the method according to the invention, the base portion of the protrusion is left when removing the material of the supporting base.

The cutting tool according to the invention is characterized in that the cutting segments having abrasive grains are formed as inside and outside cylindrical electrodeposited abrasive grain layers, which cutting segments freely project concentrically in axial direction from the supporting base, and in that the respective inner surfaces of the abrasive grain layers are smooth surfaces with precise circularity and concentricity, the roughness of which has a maximum height Rmax defined in JIS B0621 of not more than 6,3 µm, preferably not more than 0,8 µm.

In a specific embodiment of the cutting tool of the invention, the front end portions of the abrasive grain layers have inclined end surfaces which converge towards the respective smooth inner surfaces.

In particular, the abrasive grain layers of the cutting tool according to the invention are each of cylindrical continuous shape in the circumferential direction.

According to a further development of the cutting tool of the invention, circumferentially spaced cuts are formed in the projecting portions of the abrasive grain layers.

According to a further development of the cutting tool of the invention, the abrasive grain layers consist of arcuate pieces circumferentially spaced from each other.

In a specific embodiment of the cutting tool of the invention, at least one cooling liquid discharge opening is provided extending through the supporting base into the room between the abrasive grain layers.

In a specific embodiment of the cutting tool of the invention, the abrasive grains of the abrasive grain layers consist of natural or synthetic diamond abrasive grains or cubic boron nitride abrasive grains having a particle size of U.S. mesh Nos. 200 to 300.

According to a further development of the cutting tool according to the invention, the abrasive grain layers have a thickness of 0,3 to 2 mm, especially 0,5 to 0,7 mm.

### BRIEF DESCRIPTION OF THE DRAWINGS

Figure 1 is a perspective view showing a supporting base used in one embodiment of the method of this invention for producing a cutting tool;
Figure 2 is a sectional view showing the supporting base of Figure 1;
Figure 3 is a sectional view which shows that prior to the electrodeposition step, the surface of the supporting base shown in Figure 1 is partly covered with an electrically non-conductive material;
Figure 4 is a simplified sectional view showing an example of the electrodeposition step in the aforesaid embodiment of the method of producing a cutting tool in accordance with this invention;
Figure 5 is a sectional view showing an outside and an inside abrasive grain layer formed by the electrodeposition step;
Figure 6 is an enlarged partial sectional view showing part of Figure 5 on an enlarged scale;
Figure 7 is a simplified partial sectional view showing a modified example of the electrodeposition step;
Figure 8 is a simplified partial sectional view showing another modified example of the electrodeposition step;
Figures 9 and 10 are sectional views for illustrating a polishing step and a cutting step in the aforesaid embodiment of the method of this invention for producing a cutting tool;
Figure 11 is a simplified sectional view showing a dissolving step in the aforesaid embodiment of the method of this invention for producing a cutting tool;
Figure 12 is a sectional view showing the supporting base and the outside and inside abrasive grain layers after the dissolving step is over;
Figure 13 is an enlarged partial sectional view showing part of Figure 12 on an enlarged scale;
Figure 14 is a perspective view showing one embodiment of the finished cutting tool;
Figure 15 is a sectional view of the cutting tool shown in Figure 14;
Figure 16 is a perspective view of a modified embodiment of the cutting tool; and
Figure 17 is a simplified sectional view for illustrating the manner of using the cutting tool shown in Figure 14.

### DETAILED DESCRIPTION OF PREFERRED EMBODIMENTS

The invention will be described in detail below with reference to the accompanying drawings.

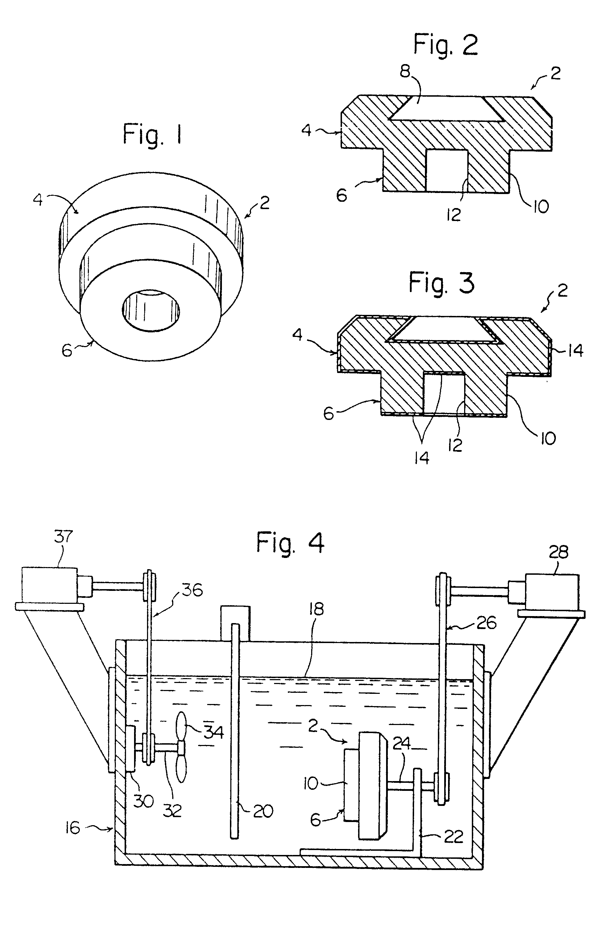

Figures 1 and 2 show a supporting base 2 preferably formed of an electrically conductive metal such as aluminum. The supporting base 2 has a nearly disc-shaped main portion 4 and a hollow cylindrical protrusion 6 projecting from the lower surface of the main portion 4. A relatively large frustoconical concave portion 8 is formed centrally on the upper surface of the main portion 4. As will be described in detail hereinafter, abrasive grain layers are formed by electrodeposition on an outer circumferential surface 10 and an inner circumferential surface 12 in the protrusion 6. It is important that the outer circumferential surface 10 and the inner circumferential surface 12 of the protrusion 6 should be finished sufficiently precisely, and each should have a circularity of extremely high precision and the concentricity of the two should be sufficiently highly precise. Desirably, the circularity and the concentricity are less than several tens of micrometers, preferably less than several micrometers. In addition, it is important that the outer circumferential surface 10 and the inner circumferential surface 12 of the protrusion 6 should have a sufficiently small surface roughness represented by a maximum height Rₘₐₓ defined in JIS B0621 of not more than 6,3 µm, preferably not more than 0,8 µm.

The method of producing the cutting tool in accordance with this invention comprises an electrodeposition step of electrodepositing abrasive grains on the outer circumferential surface 10 and the inner circumferential surface 12 of the protrusion 6 in the supporting base 2. Prior to the starting of electrodeposition, that part of the surface of the supporting base 2 which excludes the outer circumferential surface 10 and the inner circumferential surface 12 of the protrusion 6 is covered with a suitable electrically non-conductive material 14 such as a known synthetic resin tape.

With reference to Figure 4 showing one example of the electrodeposition step, an electrolytic bath 18 which may be a nickel sulfate bath is placed in an electrolytic vessel 16. The electrolytic bath 18 contains a number of abrasive grains. Preferably, the abrasive grains are natural or synthetic diamond abrasive grains or cubic boron nitride abrasive grains. The suitable particle size of the abrasive grains is U. S. mesh Nos. 200 to 300. A metal 20 to be electrolyzed which may be a nickel plate is inserted into the electrolytic bath 18, and the supporting base 2 is immersed in it. In the illustrated embodiment, a supporting frame 22 is disposed on the bottom wall of the electrolytic vessel 16, and a supporting shaft 24 is rotatably mounted on the supporting frame 22. The supporting base 2 is fixed to one end of the supporting shaft 24 by a suitable method (not shown). The other end of the supporting shaft 24 is drivingly connected to an electric motor 28 provided exteriorly of the electrolytic vessel 16 via a suitable power transmission mechanism 26 such as a belt power transmission mechanism. Within the electrolytic vessel 16 a supporting shaft 32 is rotatably mounted by a bearing means 30 fixed to the inside surface of the side wall, and a stirring vane 34 is fixed to the free end of the supporting shaft 32. The supporting shaft 32 is drivingly connected to an electric motor 37 provided exteriorly of the electrolytic vessel 16 via a suitable power transmission device 36 such as a belt power transmission mechanism. Except for the metal 20 to be electrolyzed and the supporting base 2, various elements which make contact with the electrolytic bath 18 are made of a non-conductive material.

In the electrodeposition step, the metal 20 to be electrolyzed is connected to an anode and the supporting base 2, to a cathode. At the same time, the stirring vane 34 is rotated to stir the electrolytic bath 18 properly. Furthermore, the supporting base 2 is rotated continuously or periodically at a relatively low speed. Furthermore, the electrolytic bath 18 is heated to a temperature of about 40 to 60 °C by a suitable heater (not shown). In the electrodeposition step, the abrasive grains in the electrolytic bath 18 are successively accumulated on the outer circumferential surface 10 and the inner circumferential surface 12 of the protrusion 6 in the supporting base 2, and since the outer circumferential surface 10 and the inner circumferential surface 12 are not covered with the electrically non-conductive material 14, nickel is plated successively on the outer circumferential surface 10 and the inner circumferential surface 12. Thus, on the outer circumferential surface 10 and the inner circumferential surface 12 of the protrusion, the abrasive grains accumulated successively are cemented by nickel and an abrasive grain layer is electrodeposited. The abrasive grains could be accumulated on the other surface of the supporting base 2. But since the other surface is covered with the non-conductive material 14, nickel is not plated on the other surface, and therefore no abrasive grain layer is formed on the other surface.

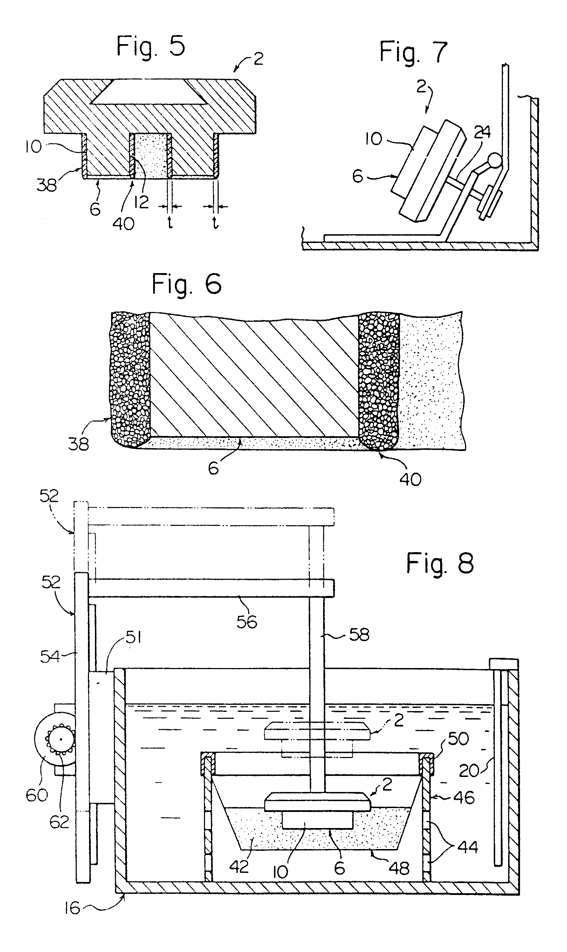

When the electrodeposition step is carried out for a predetermined period of time as above, the supporting base 2 is withdrawn from the electrolytic bath 18, and the non-conductive material 14 is removed from the supporting base 2. Figure 5 shows an outside abrasive layer 38 and an inside abrasive layer 40 formed respectively on the outer circumferential surface 10 and the inner circumferential surface 12 of the protrusion by electrodeposition. Preferably, each of the outside abrasive layer 38 and the inside abrasive layer 40 has a thickness of 0,3 to 2,0 mm, especially 0,5 to 0,7 mm. Thus, as shown on an enlarged scale in Figure 6, in the outside abrasive grain layer 38 and the inside abrasive grain layer 40, not one but several, for example 7 to 8, abrasive grains 42 are present in the thickness direction. If the thickness of the outside abrasive grain layer 38 and the inside abrasive grain layer 40 is excessively small, a sufficient strength cannot be obtained. If it is too large, the cutting characteristics of the cutting tool are degraded owing, for example, to an increase in resistance at the time of cutting. The degree of concentration of the abrasive grains in the outside abrasive grain layer 38 and the inside abrasive grain layer 40 can be properly prescribed according, for example, to the type and particle size of the abrasive grains 42. Generally, it is conveniently set at 100 to 170. The degree of concentration of the abrasive grains can be regulated by adjusting the concentration of the abrasive grains in the electrolytic bath 18, the intensity of stirring of the electrolytic bath, etc.

Figure 7 shows a modified example of the electrodeposition step in a simplified manner. In the modified example, accumulation of the abrasive grains on the outer circumferential surface 10 and the inner circumferential surface 12 of the protrusion 6 in the supporting base 2 is facilitated by inclining the supporting shaft 24 and inclining the protrusion 6 in the supporting base 2 upwardly toward its free end. Otherwise, the electrodeposition step shown in Figure 7 is substantially the same as that illustrated in Figure 4.

Figure 8 shows another modified example of the electrodeposition step in a simplified manner. In this modified example, a cylindrical frame 46 having a plurality of openings 44 provided therein for passage of the electrolytic bath is disposed on the bottom wall of the electrolytic vessel 16. Within the frame 46 is disposed a cup-like vessel 48 with an open top. More specifically, the upper end edge of the vessel 48 is fixed to the upper end portion of the frame 46 by a clip means 50 thereby to suspend the vessel 48 in position within the frame 46. The vessel 48 is made of a material permeable to the electrolytic bath 18 but impermeable to the abrasive grains 42, for example a cloth or Japanese paper. The abrasive grains 42 are not dispersed throughout the electrolytic bath 18 which may be a nickel sulfate bath, but are placed concentratingly in the vessel 48. A supporting frame 52 is mounted on the outside surface of the side wall of the electrolytic vessel via a suitable supporting means 51 for free vertical movement. The supporting frame 52 has an upstanding pillar 54 extending substantially vertically, a horizontal member 56 extending substantially horizontally from the upper end portion of the upstanding pillar 54 and a suspending pillar 58 suspending substantially vertically from the end portion of the horizontal member 56. The supporting base 2 is fixed to the lower end of the suspending pillar 58. An electric motor 60 is mounted on the supporting means 51, and a pinion gear 62 is fixed to the output shaft of the motor 60. A rack is formed in the upstanding pillar 54 of the supporting frame 52, and the pinion gear 62 engages the rack. Hence, by the rotation of the electric motor 60 in a normal or a reverse direction, the supporting frame 52 and the supporting base 2 fixed thereto are moved up and down. The metal 20 to be electrolyzed which may be a nickel plate is inserted into the electrolytic bath 18 held in the electrolytic vessel 16.

In the electrodeposition step, the metal 20 to be electrolyzed is connected to an anode, and the supporting base 2, to a cathode. By a suitable heater (not shown), the electrolytic bath 18 is heated to about 40 to 60 °C. As a result, the supporting frame 52 and the supporting base 2 fixed thereto are periodically held at a lowered position shown by the solid line and an elevated position shown by the two-dot chain line. When the supporting base 2 is held at the lowered position, relatively large amounts of the abrasive grains are accumulated on the outer circumferential surface 10 and the inner circumferential surface 12 (Figures 2 and 3) of the protrusion 6 of the supporting base 2 and fixed by a relatively small amount of nickel electrodeposited. When the supporting base 2 is held at the elevated position, only nickel is electrodeposited on the outer circumferential surface 10 and the inner circumferential surface 12 of the protrusion 6 of the supporting base 2 to strengthen the fixing of the abrasive grains 42 by the electrodeposited nickel. In this electrodeposition step, the degree of concentration of the abrasive grains in the resulting outside abrasive grains layer 38 and inside abrasive grain layer 40 (Figure 5) can be adjusted by adjusting the time during which the supporting base 2 is held at the lowered position and the time during which the supporting base 2 is held at the elevated position.

In the aforesaid embodiments of the electrodeposition step, the outside abrasive grain layer 38 and the inside abrasive grain layer 40 are simultaneously formed. If desired, it is possible to cover the inner circumferential surface 12 or the outer circumferential surface 10 of the protrusion 6 of the supporting base 6 with the electrically non-conductive material 14 and form only the outside abrasive grain layer 38 or the inside abrasive grain layer 40 in a first electrodeposition step, and thereafter in a second electrodeposition step, cover the outside abrasive grain layer 38 or the inside abrasive grain layer 40 with the non-conductive material 14 and expose the inner circumferential surface 12 or the outer circumferential surface 10 of the protrusion 6 and form the inside abrasive layer 40 or the outside abrasive layer 38 only.

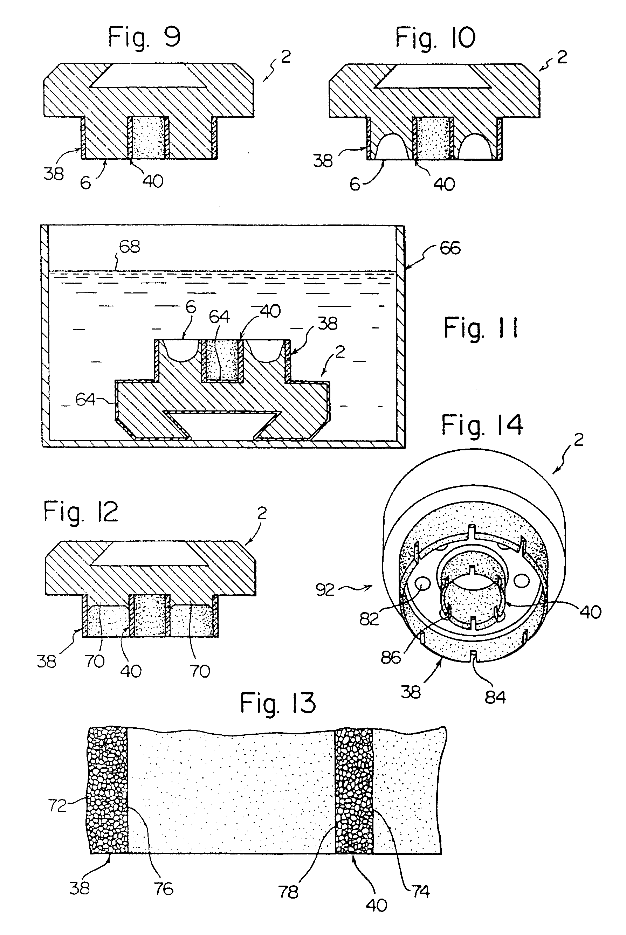

In the as-formed state of the outside and inside abrasive grain layers 38 and 40 in the electrodeposition step, the front ends of the outside and inside abrasive grain layers 38 and 40 are normally not in alignment with the front end surface of the protrusion, but project slightly downwardly beyond the front end surface of the protrusion 6 as shown in Figures 5 and 6. Preferably, therefore, after the electrodeposition step is over, the front end surfaces of the outside and inside abrasive grain layers 38 and 40 and the front end surface of the protrusion 6 of the supporting base 2 are polished by using a suitable grindstone such as one containing silicon carbide-type abrasive grains so that as shown in Figure 9, the front end surfaces of the outside and inside abrasive grain layers 38 and 40 and the front end surface of the protrusion 6 of the supporting base 2 form one substantially horizontal plane.

Then, optionally, the front end portion of the protrusion 6 of the supporting base 2 is partially cut as shown in Figure 10 by mechanical cutting. Thereafter, a dissolving step is carried out to dissolve and remove the front end portion of the protrusion 6. In one example of the dissolving step, the exposed surface of the supporting base other than the front end surface of the protrusion 6 is covered with a suitable non-soluble material 64 such as a polyester tape as shown in Figure 11. The supporting base 2 having the outside and inside abrasive grain layers 38 and 40 formed by electrodeposition is immersed in a dissolving liquor 68 held in a dissolving vessel 66. The dissolving liquor 68 may be a liquid which does not dissolve the outside and inside abrasive grain layers 38 and 40 and the non-soluble material 64, but dissolves the supporting base 2, such as a 20% aqueous solution of sodium hydroxide if the supporting base 2 is made of aluminum. To promote dissolving, the dissolving liquor 68 is desirably heated to about 70 °C by a suitable heater (not shown). When the supporting base 2 is immersed in the dissolving liquor 68, the supporting base 2 is gradually dissolved at the front end surface of the protrusion not covered with the non-soluble material 64. In this dissolving step, it is desirable to dissolve and remove only the front end portion of the protrusion 6 leaving the base portion 70 of the protrusion 6 as shown in Figure 12 instead of dissolving and removing the entire protrusion 6. If the entire protrusion 6 is dissolved and removed without leaving the base portion 70, the strength of bonding between the supporting base 2 and the outside and inside abrasive grain layers 38 and 40 becomes excessively low, as can be easily understood. When a required amount of the front end portion of the protrusion 6 has been dissolved and removed, the supporting base 2 is withdrawn from the dissolving liquor 68 and the non-soluble material 64 is removed. The cutting step described above with reference to Figure 10, namely the cutting step of mechanically cutting the front end portion of the protrusion 6 partially may be omitted. But if this cutting step is carried out, it is possible to decrease the amount of the front end portion of the protrusion 6 to be dissolved and removed and shorten the dissolving time.

When the dissolving step is carried out, the base portions of the outside and inside abrasive grain layers 38 and 40 are supported by the base portion 70 of the protrusion 6 of the supporting base 2, but the front end portions of the outside and inside abrasive grain layers 38 and 40 project concentrically from the supporting base 2 without being supported thereby, as shown in Figures 12 and 13. The outer circumferential surface 72 of the outside abrasive grain layer 38 and the inner circumferential surface 74 of the inner abrasive grain layer 40 are the free surfaces during the electrodeposition step, and therefore are not sufficiently smooth. But since the inner circumferential surface 76 of the front end portion of the outside abrasive grain layer 38 and the outer circumferential surface 78 of the inside abrasive grain layer 40 were defined by the outer circumferential surface 10 and the inner circumferential surface 12 of the front end portion of the protrusion 6 which was dissolved, they are substantially the same smooth surfaces as the outer circumferential surface 10 and the inner circumferential surface 12 of the protrusion, namely smooth surfaces having a sufficiently small surface roughness represented by a maximum height Rmax, defined by JIS B-0621 of not more than 6,3 µm, preferably not more than 0,8 µm.

The term "smooth surface", as used with regard to the inner circumferential surface 76 of the projecting portion of the outer abrasive grain layer 38 and the outer circumferential surface 78 of the projecting portion of the inside abrasive grain layer 40 means that before being subjected to dressing to be described hereinafter, the surface has a sufficiently small surface roughness represented by a maximum height Rmax, defined by JIS B-0621, of not more than 6,3 µm.

It is important that the inner circumferential surface 76 of the projecting portion of the outside abrasive grain layer 38 and the outer circumferential surface 78 of the projecting portion of the inside abrasive grain layer 40 should be smooth surfaces, and that the abrasive grains 42 should be distributed in layer sufficiently uniformly in the inner circumferential surface 76 of the projecting portion of the outside abrasive layer 38 and the outer circumferential surface 78 of the projecting portion of the inside abrasive grain layer 40.

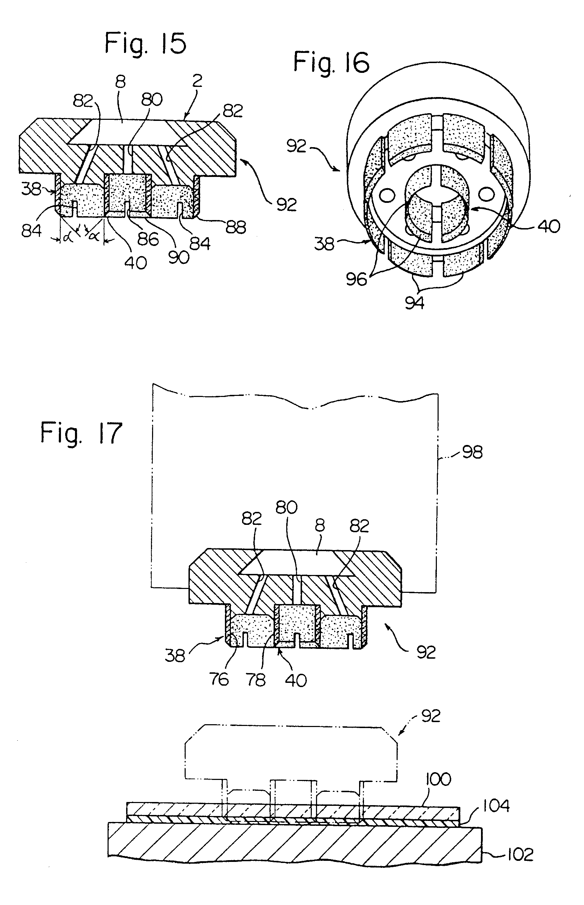

With reference to Figures 14 and 15 showing a preferred embodiment of the cutting tool in accordance with this invention, the supporting base 2 is drilled after the dissolving step in the preferred embodiment. As a result, one central cooling liquid discharge hole 80 is formed centrally in the supporting substrate 2. The hole 80 extends downwardly from the center of the concave portion 8 and opens to a central portion surrounded by the inside abrasive grain layer 40. At the same time, a plurality of circumferentially spaced cooling liquid discharge holes 82 are bored which extend downwardly from the peripheral edge portion of the concave portion 8 in a slightly inclined fashion radially outwardly and open to a portion between the inside abrasive grain layer 40 and the outside abrasive grain layer 38.

Furthermore, in the preferred embodiment, the outside and inside abrasive grain layers 38 and 40 are further processed as follows: As shown in Figures 14 and 15, a plurality of circumferentially spaced cuts 84 and 86 are formed in the outside and inside abrasive grain layers 38 and 40. As clearly shown in Figure 15, the front end portion of the outer circumferential surface of the outside abrasive grain layer 38 is processed into an inclined surface 88 inclined radially inwardly, and its front end is sharpened. Furthermore, the front end portion of the inner circumferential surface of the inside abrasive grain layer 40 is processed into an inclined surface 90 inclined radially outwardly and its front end is sharpened. As a result, a finished cutting tool is obtained. The angle α of inclination of the inclined surfaces 88 and 90 may be about 30 to 80 degrees.

The formation of the cuts 84 and 86 and the formation of the inclined surfaces 88 and 90 may be conveniently effected by applying an electrical discharge. If desired, the cuts 84 and 86 may also be formed by covering those portions of the outer circumferential surface 10 and the inner circumferential surface 12 of the protrusion 6 of the supporting base 2 which correspond to the cuts 84 and 86 with a non-conductive material during the electrodeposition step so that no abrasive grain layer is formed in the covered portions.

Figure 16 shows a modified embodiment of the cutting tool in accordance with this invention. In the cutting tool 92 shown in Figures 14 and 15, the outside and inside abrasive grain layers 38 and 40 are each of a cylindrical shape continuously in the circumferential direction. In contrast, in the cutting tool 92 illustrated in Figure 16, the outside abrasive grain layers 38 are composed of a plurality of (eight in the illustrated embodiment) circumferentially spaced arcuate pieces 94, and likewise, the inside abrasive layer 40 is composed of a plurality of (four in the illustrated embodiment) circumferentially spaced arcuate pieces 96. These outside abrasive layer 38 and inside abrasive grain layer 40 may conveniently formed by covering the outer circumferential surface and the inner circumferential surface 12 (Figures 1 to 3) of the protrusion 6 of the supporting base 2 with a non-conductive material partially at circumferentially spaced intervals corresponding to the intervals of the arcuate pieces 94 and the intervals of the arcuate pieces 96 in the electrodeposition step so that no abrasive layer is formed in the covered portions.

The manner of using the cutting tool 92 constructed in accordance with this invention will be briefly described below. As illustrated in a simplified form in Figure 17, the cutting tool 92 is fixed to the lower end of a rotating shaft 98. The concave portion 8 formed in the supporting base 2 of the cutting tool 92 communicates with a cooling liquid supply passage (not shown) formed within the rotating shaft 98. Prior to cutting of a glass or ceramic plate with the cutting tool 92, the outside and inside abrasive grain layers 38 and 40 of the cutting tool 92 are dressed. Dressing can be carried out by cutting a dresser which may be a suitable grinding stone such as a grinding stone containing silicon carbide abrasive grains with the outside and inside abrasive grain layers 38 and 40 of the cutting tool 92.

As shown in Figure 17, a workpiece 100 such as a glass or ceramic plate to be cut is fixed to a suitable chuck table 102 by a suitable method such as vacuum adsorption. Conveniently, a plastic tape 104 (which may be the same as a known tape to be bonded to the undersurface of a semiconductor wafer when the wafer is diced) is bonded to the undersurface of the workpiece 100. In cutting the workpiece 100, the rotating shaft 98 is rotated at a high speed, and is lowered at a relatively low speed. As a result, the outside and inside abrasive grains layers 38 and 40 of the cutting tool 92 rotated at a high speed act on the workpiece 100 to cut the workpiece 100 gradually from its upper surface toward its lower surface. A suitable cooling liquid such as water is impinged from the cooling liquid discharge holes 80 and 82 to cool the outside and inside abrasive grain layers 38 and 40 and the workpiece 100. Conveniently, the cutting tool 92 is lowered to a position shown by the two-dot chain line in Figure 17 at which the front ends of the outside and inside abrasive grain layers 38 and 40 are beyond the lower surface of the workpiece 100 and partly advance into the tape 104. Consequently, the workpiece 100 is cut along a circular outside cutting line defined by the inner peripheral surface 76 of the outside abrasive grain layer 38 and a circular inside cutting line defined by the outer circumferential surface 78 of the inside abrasive grain layer 40. When the tape 104 is peeled from the workpiece 100 after this cutting operation, a disc-shaped product is obtained of which outer circumferential edge is defined by the circular outside cutting line and of which inner circumferential edge is defined by the circular inside cutting line. The product can be used as a base plate of optical or magnetic discs.

In the cutting tool 92 constructed in accordance with this invention, the inner circumferential surface 76 of the outside abrasive grain layer 38 and the outer circumferential surface 78 of the inside abrasive grain layer 40 have a sufficiently precise circularity and concentricity if the circularity and concentricity of the outer circumferential surface 10 and the inner circumferential surface 12 of the protrusion 6 in the supporting base used in the electrodeposition are made sufficiently precise. Furthermore, the inner circumferential surface 76 of the outside abrasive layer 38 and the outer circumferential surface 78 of the inside abrasive grain layer 40 are sufficiently smooth if only the outer circumferential surface 10 and the inner circumferential surface 12 of the protrusion 6 of the supporting base 2 are made sufficiently smooth. Accordingly, the cutting tool 92 can cut the workpiece 100 with sufficiently precisely provided circular outside and inside cutting lines, and optical or magnetic disc base plates cut as precisely as is desired can be obtaines efficiently.

## Claims

1. A method of producing a cutting tool comprising a supporting base (2) with inside and outside supporting surfaces and concentric cutting segments (38, 40) having abrasive grains which are provided in circumferentially spaced relationship, characterized by the following steps:
- providing a supporting base (2) with a protrusion (6) having smooth concentric cylindrical inner and outer circumferential surfaces (10, 12) the roughness of which has a maximum height Rmax defined in JIS B0621 of not more than 6,3 µm, preferably not more than 0,8 µm,
- electrodepositing abrasive grains (42) on the concentric inner and outer surfaces (10, 12) to form inside and outside abrasive grain layers (38, 40) each having several abrasive grains (42) present in the thickness direction,
- removing part of the material of the supporting base (2) between the abrasive grain layers (38, 40) by cutting and/or dissolving in order to form front end portions of the inside and outside abrasive grain layers (38, 40) which front end portions freely project concentrically in axial direction from the supporting base (2) and of which the respective opposite inner surfaces (76, 78) are smooth surfaces corresponding to the circumferential inner and outer surfaces (10, 12).

2. The method of claim 1,
characterized in that the front end portions of the abrasive grain layers (38, 40) are processed to form inclined end surfaces (88, 90) which converge towards the respective smooth inner surfaces (76, 78).

3. The method of claim 2,
characterized in that the processing is carried out by an electrical discharge.

4. The method of any of claims 1 to 3,
characterized in that a supporting base (2) is used which has a hollow cylindrical protrusion (6) forming the outer and inner circumferential surfaces (10, 12),
and in that the front end surfaces of the abrasive grain layers (38, 40) are polished to the same plane before removing the material of the supporting base (2).

5. The method of any of claims 1 to 4,
characterized by a step of mechanically cutting the front end portion of the protrusion (6) partly after the electrodeposition step and before the step of removing material of the supporting base (2).

6. The method of any of claims 1 to 5,
characterized in that circumferentially spaced cuts (84, 86) are formed in the inner and outer abrasive grain layers (38, 40) during electrodepositing by masking and/or after electrodepositing by an electrical discharge.

7. The method of any of claims 1 to 6,
characterized in that natural or synthetic diamond abrasive grains or cubic boron nitride abrasive grains having a particle size of U.S. mesh Nos.200 to 300 are used.

8. The method of any of claims 1 to 7,
characterized in that the outside and inside abrasive grain layers (38, 40) are formed with a thickness of 0,3 to 2,0 mm especially 0,5 to 0,7 mm.

9. The method of any of claims 1 to 8,
characterized in that the front end portions of the abrasive grain layers (38, 40) are provided with an inclination angle at their inclinded surfaces (88, 90) of 30° to 80° against the respective smooth inner surfaces (76, 78).

10. The method of any of claims 1 to 9,
characterized in that the base portion (70) of the protrusion (6) is left when removing the material of the supporting base (2).

11. A cutting tool comprising a supporting base (2) with inside and outside supporting surfaces and concentric cutting segments (38, 40) having abrasive grains (42) which are provided in circumferentially spaced relationship,
characterized
in that the cutting segments having abrasive grains (42) are formed as inside and outside cylindrical electrodeposited abrasive grain layers (38, 40), which cutting segments freely project concentrically in axial direction from the supporting base (2),
and in that the respective inner surfaces (76, 78) of the abrasive grain layers (38, 40) are smooth surfaces with precise circularity and concentricity, the roughness of which has a maximum height Rmax defined in JIS B0621 of not more than 6,3 µm, preferably not more than 0,8 µm.

12. The cutting tool of claim 11,
characterized in that the front end portions of the abrasive grain layers (38, 40) have inclined end surfaces (88, 90) which converge towards the respective smooth inner surfaces (76,78).

13. The cutting tool of claim 11 or 12,
characterized in that the abrasive grain layers (38, 40) are each of cylindrical continuous shape in the circumferential direction.

14. The cutting tool of any of claims 11 to 13,
characterized in that circumferentially spaced cuts (84, 86) are formed in the projecting portions of the abrasive grain layers (38, 40).

15. The cutting tool of any of claims 11 to 14,
characterized in that the abrasive grain layers (38, 40) consist of arcuate pieces circumferentially spaced from each other.

16. The cutting tool of any of claims 11 to 15,
characterized in that at least one cooling liquid discharge opening (80, 82) is provided extending through the supporting base (2) into the room between the abrasive grain layers (38, 40).

17. The cutting tool of any of claims 11 to 16,
characterized in that the abrasive grains (42) of the abrasive grain layers (38, 40) consist of natural or synthetic diamond abrasive grains or cubic boron nitride abrasive grains having a particle size of U.S.mesh Nos. 200 to 300.

18. The cutting tool of any of claims 11 to 17,
characterized in that the abrasive grain layers (38, 40) have a thickness of 0,3 to 2 mm, especially 0,5 to 0,7 mm.

## Patentansprüche

1. Verfahren zum Herstellen eines Schneidwerkzeugs, das eine tragende Basis (2) mit inneren und äußeren Stützflächen und konzentrischen Schneidsegmenten (38, 40) mit Schleifkörnern aufweist, wobei die Schneidsegmente in umfangsmäßig beabstandeter Beziehung vorgesehen sind, gekennzeichnet durch folgende Schritte:
- Herstellen einer tragenden Basis (2) mit einem Vorsprung (6), der glatte konzentrische zylindrische Innen- und Außenumfangsflächen (10, 12) hat, deren Rauhigkeit eine Maximalhöhe Rmax, definiert gemäß JIS B0621, von nicht mehr als 6,3 µm, vorzugsweise nicht mehr als 0,8 µm, hat,
- elektrochemisches Abscheiden von Schleifkörnern (42) auf den konzentrischen Innen- und Außenflächen (10, 12), um innere und äußere Schleifkornschichten (38, 40) zu bilden, bei denen jeweils mehrere Schleifkörner (42) in der Dickenrichtung vorhanden sind,
- Entfernen eines Teils des Materials der tragenden Basis (2) zwischen den Schleifkornschichten (38, 40) durch spangebendes Bearbeiten und/oder Lösen, um vordere Endbereiche der inneren und äußeren Schleifkornschichten (38, 40) zu bilden,
wobei die vorderen Endbereiche von der tragenden Basis (2) konzentrisch in Axialrichtung frei vorstehen und ihre jeweiligen gegenüberliegenden Innenflächen (76, 78) glatte Flächen sind, die den inneren und äußeren Umfangsflächen (10, 12) entsprechen.

2. Verfahren nach Anspruch 1,
dadurch gekennzeichnet,
daß die vorderen Endbereiche der Schleifkornschichten (38, 40) bearbeitet werden, um schräge Endflächen (88, 90) zu bilden, die zu den jeweiligen glatten Innenflächen (76, 78) hin konvergieren.

3. Verfahren nach Anspruch 2,
dadurch gekennzeichnet,
daß das Bearbeiten durch Funkenerosion durchgeführt wird.

4. Verfahren nach einem der Ansprüche 1 bis 3,
dadurch gekennzeichnet,
daß eine tragende Basis (2) verwendet wird, die einen hohlen zylindrischen Vorsprung (6) hat, der die äußeren und inneren Umfangsflächen (10, 12) bildet,
und daß die vorderen Endflächen der Schleifkornschichten (38, 40) auf dieselbe Ebene geschliffen werden, bevor das Material der tragenden Basis (2) entfernt wird.

5. Verfahren nach einem der Ansprüche 1 bis 4,
gekennzeichnet durch
einen Schritt des teilweisen mechanischen spangebenden Bearbeitens des vorderen Endbereichs des Vorsprungs (6) nach dem Schritt des elektrochemischen Abscheidens und vor dem Schritt des Entfernens von Material der tragenden Basis (2).

6. Verfahren nach einem der Ansprüche 1 bis 5,
dadurch gekennzeichnet,
daß in den inneren und äußeren Schleifkornschichten (38, 40) während des elektrochemischen Abscheidens durch Maskieren und/oder nach dem elektrochemischen Abscheiden durch Funkenerosion umfangsmäßig beabstandete Schnitte (84,86) gebildet werden.

7. Verfahren nach einem der Ansprüche 1 bis 6,
dadurch gekennzeichnet,
daß natürliche oder synthetische Diamantschleifkörner oder kubische Bornitridschleifkörner mit einer Teilchengröße von US-Mesh Nr. 200 bis 300 verwendet werden.

8. Verfahren nach einem der Ansprüche 1 bis 7,
dadurch gekennzeichnet,
daß die äußeren und inneren Schleifkornschichten (38, 40) mit einer Dicke von 0,3 bis 2,0 mm, insbesondere von 0,5 bis 0,7 mm, gebildet werden.

9. Verfahren nach einem der Ansprüche 1 bis 8,
dadurch gekennzeichnet,
daß die vorderen Endbereiche der Schleifkornschichten (38, 40) an ihren Schrägflächen (88, 90) mit einem Neigungswinkel von 30° bis 80° gegenüber den jeweiligen glatten Innenflächen (76, 78) versehen werden.

10. Verfahren nach einem der Ansprüche 1 bis 9,
dadurch gekennzeichnet,
daß der Basisbereich (70) des Vorsprungs (6) stehengelassen wird, wenn das Material der tragende Basis (2) entfernt wird.

11. Schneidwerkzeug, das eine tragende Basis (2) mit inneren und äußeren Stützflächen und konzentrischen Schneidsegmenten (38, 40) mit Schleifkörnern (42) aufweist, wobei die Schneidsegmente in umfangsmäßig beabstandeter Beziehung vorgesehen sind,
dadurch gekennzeichnet,
daß die Schneidsegmente, die Schleifkörner (42) aufweisen, als innere und äußere zylindrische elektrochemisch abgeschiedene Schleifkornschichten (38, 40) ausgebildet sind, wobei die Schneidsegmente von der tragenden Basis (2) konzentrisch in Axialrichtung frei vorstehen,
und daß die jeweiligen Innenflächen (76, 78) der Schleifkornschichten (38, 40) glatte Flächen mit präziser Kreisform und Konzentrizität sind, deren Rauhigkeit eine Maximalhöhe Rmax, definiert gemäß JIS B0621, von nicht mehr als 6,3 µm, vorzugsweise nicht mehr als 0,8 µm, hat.

12. Schneidwerkzeug nach Anspruch 11,
dadurch gekennzeichnet,
daß die vorderen Endbereiche der Schleifkornschichten (38, 40) schräge Endflächen (88, 90) haben, die zu den jeweiligen glatten Innenflächen (76, 78) hin konvergieren.

13. Schneidwerkzeug nach Anspruch 11 oder 12,
dadurch gekennzeichnet,
daß die Schleifkornschichten (38, 40) jeweils zylindrische kontinuierliche Gestalt in Umfangsrichtung haben.

14. Schneidwerkzeug nach einem der Ansprüche 11 bis 13,
dadurch gekennzeichnet,
daß umfangsmäßig beabstandete Schnitte (84, 86) in den vorstehenden Bereichen der Schleifkornschichten (38, 40) gebildet sind.

15. Schneidwerkzeug nach einem der Ansprüche 11 bis 14,
dadurch gekennzeichnet,
daß die Schleifkornschichten (38, 40) aus bogenförmigen Stücken bestehen, die umfangsmäßig voneinander beabstandet sind.

16. Schneidwerkzeug nach einem der Ansprüche 11 bis 15,
dadurch gekennzeichnet,
daß wenigstens eine Kühlflüssigkeitsauslaßöffnung (80, 82) vorgesehen ist, die sich durch die tragende Basis (2) in den Raum zwischen den Schleifkornschichten (38, 40) erstreckt.

17. Schneidwerkzeug nach einem der Ansprüche 11 bis 16,
dadurch gekennzeichnet,
daß die Schleifkörner (42) der Schleifkornschichten (38, 40) aus natürlichen oder synthetischen Diamantschleifkörnern oder kubischen Bornitridschleifkörnern mit einer Teilchengröße von US-Mesh Nr. 200 bis 300 bestehen.

18. Schneidwerkzeug nach einem der Ansprüche 11 bis 17,
dadurch gekennzeichnet,
daß die Schleifkornschichten (38, 40) eine Dicke von 0,3 bis 2 mm, insbesondere von 0,5 bis 0,7 mm, haben.

## Revendications

1. Un procédé de fabrication d'un outil de coupe comprenant une base de support (2) avec des surfaces de support interne et externe des segments de coupe concentriques (38, 40) ayant des grains abrasifs (42) qui sont disposés en relation d'écartement circonférenciel,
caractérisé par les étapes suivantes :
- fourniture d'une base de support (2) avec une saillie (6) ayant des surfaces circonférencielles (10, 12) interne et externe cylindriques concentriques lisses dont la rugosité a une hauteur maximale Rmax définie dans JIS B 0621 de pas plus de 6,3 µm , de préférence pas plus de 0,8 µm,
- dépôt par électrolyse de grains abrasifs (42) sur les surfaces interne et externe concentriques (10, 12) pour former des couches intérieure et extérieure (38, 40) de grains abrasifs ayant chacune plusieurs grains abrasifs (42) présents dans la direction de l'épaisseur,
- enlèvement d'une partie de la matière de la base de support (2) entre les couches (38, 40) de grains abrasifs par coupe et/ou dissolution de manière à former des portions d'extrémité frontale des couches intérieure et extérieure (38, 40) de grains abrasifs, lesquelles portions d'extrémité frontale font saillie librement concentriquement en direction axiale depuis la base de support (2) et dont les surfaces internes opposées (76, 78) respectives sont des surfaces lisses correspondant aux surfaces circonférencielles (10, 12) interne et externe.

2. Le procédé de la revendication 1,
caractérisé en ce que les portions d'extrémité frontale des couches (38, 40) de grains abrasifs sont usinées pour former des surfaces d'extrémité (88, 90) inclinées qui convergent vers les surfaces intérieures lisses (76, 78) respectives.

3. Le procédé de la revendication 2,
caractérisé en ce que l'usinage est effectué par décharge électrique.

4. Le procédé de l'une quelconque des revendications 1 à 3,
caractérisé en ce qu'on utilise une base de support (2) qui a une saillie cylindrique (6) creuse formant les surfaces circonférencielles (10, 12) externe et interne,
et en ce que les surfaces d'extrémité frontale des couches (38, 40) de grains abrasifs sont polies au même plan avant enlèvement de la matière de la base de support (2).

5. Le procédé de l'une quelconque des revendications 1 à 4,
caractérisé par une étape de coupe mécanique de la portion d'extrémité frontale de la saillie (6) partiellement avant l'étape de dépôt par électrolyse et avant l'étape d'enlèvement de matière de la base de support (2).

6. Le procédé de l'une quelconque des revendications 1 à 5,
caractérisé en ce que des découpes (84, 86) espacées circonférenciellement sont formées dans les couches intérieure et extérieure (38, 40) de grains abrasifs pendant le dépôt par électrolyse par masquage et/ou après dépôt par électrolyse par une décharge électrique.

7. Le procédé de l'une quelconque des revendications 1 à 6,
caractérisé en ce qu'on utilise des grains abrasifs en diamant naturel ou synthétique ou des grains abrasifs cubiques en nitrure de bore ayant une dimension de particules de maille US Numéros 200 à 300.

8. Le procédé de l'une quelconque des revendications 1 à 7,
caractérisé en ce que les couches extérieure et intérieure (38, 40) de grains abrasifs sont formés avec une épaisseur de 0,3 à 2,0 mm, en particulier 0,5 à 0,7 mm.

9. Le procédé de l'une quelconque des revendications 1 à 8,
caractérisé en ce que les portions d'extrémité frontale des couches (38, 40) de grains abrasifs sont munies d'un angle d'inclinaison sur leurs surfaces inclinées (88, 90) de 30° à 80° par rapport aux surfaces internes lisses (76, 78) respectives.

10. Le procédé de l'une quelconque des revendications 1 à 9,
caractérisé en ce que la portion de base (70) de la saillie (6) est conservée lors de l'enlèvement de la matière de la base de support (2).

11. Un outil de coupe comprenant une base de support (2) avec des surfaces de support interne et externe et des segments de coupe concentriques (38, 40) ayant des grains abrasifs (42) qui sont disposés en relation d'écartement circonférenciel,
caractérisé
en ce que les segments de coupe ayant des grains abrasifs (42) sont réalisés sous forme de couches intérieure et extérieure (38, 40) de grains abrasifs déposés par électrolyse, lesquels segments font saillie librement en direction axiale depuis la base de support (2),
et en ce que les surfaces internes (76, 78) respectives des couches (38, 40) de grains abrasifs sont des surfaces lisses avec une circularité et une concentricité précises, dont la rugosité a une hauteur maximale Rmax définie dans JIS B0621 de pas plus de 6,3 µm , de préférence pas plus de 0,8 µm.

12. L'outil de coupe de la revendication 11,
caractérisé en ce que les portions d'extrémité frontale des couches (38, 40) de grains abrasifs ont des surfaces d'extrémité (88, 90) inclinées qui convergent vers les surfaces internes lisses (76, 78) respectives.

13. L'outil de coupe de la revendication 11 ou 12,
caractérisé en ce que les couches (38, 40) de grains abrasifs sont chacune de forme cylindrique continue dans la direction circonférencielle.

14. L'outil de coupe de l'une quelconque des revendications 11 à 13,
caractérisé en ce que des découpes (84, 86) espacées circonférenciellement sont formées dans les portions saillantes des couches (38, 40) de grains abrasifs.

15. L'outil de coupe de l'une quelconque des revendications 11 à 14,
caractérisé en ce que les couches (38, 40) de grains abrasifs sont constituées par des pièces en forme d'arc espacées les unes des autres.

16. L'outil de coupe de l'une quelconque des revendications 11 à 15,
caractérisé en ce qu'au moins une ouverture (80, 82) d'évacuation de liquide de refroidissement est disposée s'étendant à travers la base de support (2) dans l'espace entre les couches (38, 40) de grains abrasifs.

17. L'outil de coupe de l'une quelconque des revendications 11 à 16,
caractérisé en ce que les grains abrasifs (42) des couches (38, 40) de grains abrasifs sont constitués de grains abrasifs en diamant naturel ou synthétique ou de grains abrasifs cubiques en nitrure de bore ayant une dimension de particules de maille US Numéros 200 à 300.

18. L'outil de coupe de l'une quelconque des revendications 11 à 17,
caractérisé en ce que les couches (38, 40) de grains abrasifs ont une épaisseur de 0,3 à 2,0 mm, en particulier 0,5 à 0,7 mm.
